# EUROPEAN PATENT APPLICATION

(11) **EP 4 474 365 A1**
(43) Date of publication of application: **11.12.2024**
(21) Application number: 23200270.9
(22) Date of filing: 28.09.2023
(51) Int. Cl.: C04B 20/10, C04B 28/04

(54) **CONCRETE COMPOSITION AND CONCRETE COATING MATERIAL CONTAINING BACTERIA HAVING CARBON DIOXIDE ADSORPTION MECHANISM, AND SHOTCRETE CONSTRUCTION METHOD USING THE SAME**

(30) Priority: 09.06.2023 KR 20230074275; 09.06.2023 KR 20230074276
(71) Applicant: Kyonggi University Industry & Academia Cooperation Foundation, Suwon, Kyeonggi-don 16227 (KR)
(72) Inventor: Yang, Keun Hyeok, 16504 Suwon-si, Gyeonggi-do (KR)
(74) Representative: Isarpatent

(57) **Abstract**

A concrete composition and concrete coating material contain bacteria having a carbon dioxide adsorption mechanism in order to improve the durability of concrete structures and adsorb carbon dioxide in the air regardless of light and dark conditions. A shotcrete construction method uses the same. The concrete composition contains a cement-based inorganic binder and an aggregate mixture. The cement-based inorganic binder includes at least one of type 1 ordinary Portland cement, blast furnace slag, and fly ash. The aggregate mixture includes a normal aggregate, and a porous material impregnated with alkalophilic bacteria having a carbon dioxide adsorption mechanism and forming a glycocalyx. The concrete coating material contains the cement-based inorganic binder, the aggregate mixture, and a fiber material. The fiber material may include at least one of polyethylene and nylon.

## Description

### TECHNICAL FIELD

The disclosure relates to a concrete composition and concrete coating material adsorbing carbon dioxide, and a shotcrete construction method using the same. In particular, the disclosure relates to a concrete composition and concrete coating material containing bacteria having a carbon dioxide adsorption mechanism and forming a glycocalyx, thereby adsorbing carbon dioxide in the air, and a shotcrete construction method using the same.

### BACKGROUND

In recent years, as the damage caused by climate change increases, interest in reducing carbon dioxide, which is pointed out as a cause of climate change, is increasing. Accordingly, various efforts are being made to reduce carbon dioxide across various industries. In particular, it is known that cement, which is essential for manufacturing concrete in the construction industry, emits more than 0.8 tons of carbon dioxide per ton produced. Therefore, the construction industry is making efforts to realize carbon neutrality, which reduces the net emission of carbon dioxide to zero as much as it emits carbon dioxide.

In general cement, a carbonation reaction occurs in which calcium hydroxide (Ca(OH)₂), which is a hydration product, reacts with carbon dioxide (CO₂) to produce calcium carbonate (CaCO₃). Through this, concrete that adsorbs carbon dioxide in the air can be manufactured. However, there is a problem that this carbonation reaction not only lowers the strength of concrete structures by changing the pH of cement to neutral, but also becomes a major cause of corrosion of reinforcing bars to significantly reduce the durability of concrete structures.

Alternatively, it is possible to manufacture concrete adsorbing carbon dioxide in the air by utilizing γ-C₂S contained in slag which is an industrial by-product generated during stainless steel manufacturing. However, this also induces carbonation of cement, which can reduce the durability of concrete structures. Moreover, since the amount of γ-C₂S generated during stainless steel manufacturing is remarkably small, there is a problem that it is somewhat difficult to apply this technology to industrial sites.

Therefore, interest in the development of technology for adsorbing carbon dioxide in the air while maintaining the durability of concrete structures is increasing. For example, in the case of coating photocatalyst on a surface of a concrete structure, it is possible to adsorb carbon dioxide in the air while maintaining the durability of the concrete structure. However, there is a problem that the concrete structure coated with the photocatalyst can adsorb carbon dioxide in a strong ultraviolet environment, and has a short service life because the photocatalyst-coated surface can be detached or easily damaged when exposed to the outside.

Accordingly, it is necessary to develop a technology capable of adsorbing carbon dioxide in the air even in environments without strong ultraviolet rays, while maintaining the durability of concrete structures.

### SUMMARY

The disclosure is intended to provide a concrete composition and concrete coating material capable of not only improving the durability of concrete structures, but also adsorbing carbon dioxide in the air regardless of light and dark conditions.

According to the disclosure, a concrete composition contains a cement-based inorganic binder including at least one of type 1 ordinary Portland cement, blast furnace slag, and fly ash; and an aggregate mixture including a normal aggregate and a porous material impregnated with alkalophilic bacteria having a carbon dioxide adsorption mechanism and forming a glycocalyx.

The concrete composition may contain 20 to 25 wt% of the cement-based inorganic binder, and 75 to 80 wt% of the aggregate mixture.

The aggregate mixture may contain 70 to 95 vol% of the normal aggregate, and 5 to 30 vol% of the porous material.

The bacteria may be one or more species selected from the group consisting of Rhodobacter capsulatus, Rhodopseudomonas palustris, Rhodobacter blasticus, and Rhodobacter sphaeroides.

The bacteria may be one or more species selected from the group consisting of Thermoproteus, Sulfolobus, Planctomyces, and Anammox.

The porous material may contain at least one of expanded vermiculite, perlite, diatomaceous earth, and superabsorbent polymer.

The porous material may be impregnated with the bacteria under a negative pressure condition.

According to the disclosure, a concrete coating material contains a cement-based inorganic binder including type 1 ordinary Portland cement, fly ash, blast furnace slag, and polymer powder; an aggregate mixture including fine aggregate and a porous material impregnated with alkalophilic bacteria having a carbon dioxide adsorption mechanism and forming a glycocalyx; and a fiber material including at least one of polyethylene and nylon.

The concrete coating material may contain 20 to 50 wt% of the cement-based inorganic binder, 50 to 80 wt% of the aggregate mixture, and 0.1 to 1 part by volume of the fiber material based on 100 parts by volume of the cement-based inorganic binder and the aggregate mixture.

The cement-based inorganic binder may contain 30 to 40 wt% of the type 1 ordinary Portland cement, 15 to 25 wt% of the fly ash, 40 to 50 wt% of the blast furnace slag, and 1 to 10 wt% of the polymer powder.

The polymer powder may be an ethylene vinyl acetate (EVA) resin.

The aggregate mixture may contain 30 to 80 vol% of the fine aggregate and 20 to 70 vol% of the porous material.

The fiber material may have a diameter of 100 to 140 µm.

According to the disclosure, a shotcrete construction method may use any one of the concrete coating materials described above.

The concrete composition and concrete coating material according to the disclosure contain bacteria having a carbon dioxide adsorption mechanism and forming a glycocalyx, thereby improving the durability of concrete structures and adsorbing carbon dioxide in the air regardless of light and shade conditions.

In addition, the concrete composition and concrete coating material according to the disclosure contain alkalophilic bacteria having a carbon dioxide adsorption mechanism and forming a glycocalyx, so that even when the surface of the concrete structure is damaged, the ability to adsorb carbon dioxide can be maintained by the bacteria present inside

The concrete composition and concrete coating material according to the disclosure contain a porous material impregnated with bacteria, so that an environment in which bacteria can grow can be formed even inside hardened concrete.

The concrete coating material according to the disclosure can be easily applied to not only newly constructed concrete structures, but also already constructed concrete structures, and can increase the efficiency of carbon dioxide adsorption by being cast on the surface of concrete structures in contact with the atmosphere.

### BRIEF DESCRIPTION OF THE DRAWINGS

FIG. 1 is a diagram showing a mechanism in which bacteria adsorb carbon dioxide through the Calvin cycle, according to the disclosure.
FIG. 2 is a diagram showing a mechanism in which bacteria adsorb carbon dioxide through the reverse tricarboxylic acid (TCA) cycle, according to the disclosure.
FIG. 3 is a diagram showing a mechanism in which bacteria adsorb carbon dioxide through the hydroxypropionate cycle, according to the disclosure.
FIG. 4 is a graph showing the adsorption performance of carbon dioxide at 14 days of age of concrete blocks according to a comparative example and experimental examples.
FIG. 5 is a graph showing the survival number of bacteria at 14 days of age of concrete blocks according to a comparative example and experimental examples.

### DETAILED DESCRIPTION

Hereinafter, various embodiments of the disclosure will be described in detail with reference to the accompanying drawings. The disclosure may, however, be embodied in many different forms and should not be construed as being limited to the embodiments set forth herein. Rather, these embodiments are provided so that the disclosure will be thorough and complete and will fully convey the scope of the disclosure to those skilled in the art.

In the following description of embodiments, techniques that are well known in the art and not directly related to the disclosure are not described. This is to clearly convey the subject matter of the disclosure by omitting an unnecessary explanation. In the disclosure, the same or corresponding elements are denoted by the same reference numerals.

A concrete composition according to the disclosure contains a cement-based inorganic binder and an aggregate mixture.

The cement-based inorganic binder may include at least one of type 1 ordinary Portland cement, blast furnace slag, and fly ash. The aggregate mixture may include a normal aggregate, and a porous material impregnated with alkalophilic bacteria having a carbon dioxide adsorption mechanism and forming a glycocalyx.

Hereinafter, the concrete composition according to the disclosure will be described in more detail.

The cement-based inorganic binder may be composed of only type 1 ordinary Portland cement, but part of the type 1 ordinary Portland cement may be replaced with blast furnace slag and fly ash in order to reduce carbon dioxide emitted during the production process of the type 1 ordinary Portland cement.

The blast furnace slag, which is an industrial by-product generated when pig iron is manufactured in a blast furnace at a steel mill, has an effect of reducing heat of hydration, and also has latent hydraulic properties that improve the long-term strength of concrete structures. The blast furnace slag itself has a weak hardening property, but it has the property of accelerating hardening by the action of calcium hydroxide and sulfate, which are cement hydration products.

The fly ash corresponds to a fine powder form that is collected by an electric or mechanical current collector in the form of spherical particles due to surface tension as the pulverized coal melts with the high-temperature combustion gas and cools rapidly on the way to the chimney when pulverized coal is incinerated at high temperature in a thermal power plant. Adding the fly ash to concrete composition increases the curing time somewhat, but has advantages such as enhancement of long-term strength of concrete structures, reduction of heat of hydration, inhibition of alkali aggregate reaction, resistance to sulfate, and improvement of watertightness.

The aggregate mixture may contain 70 to 95 vol% of normal aggregate and 5 to 30 vol% of porous material.

The normal aggregate may include coarse aggregate and fine aggregate. Here, the coarse aggregate is an aggregate remaining at 90% or more by weight in a 5 mm sieve, preferably gravel may be used. The fine aggregate is an aggregate that fully passes through a 10 mm sieve and passes through 90% or more by weight in a 5 mm sieve, preferably sand may be used.

The porous material may contain at least one of expanded vermiculite, perlite, diatomaceous earth, and superabsorbent polymer, having excellent cation exchange ability. In this case, the porous material may be impregnated with alkalophilic bacteria having a carbon dioxide adsorption mechanism and forming a glycocalyx.

When the bacteria are simply added during the preparation of the concrete composition, the bacteria are likely to die due to friction and impact during the mixing process of the concrete composition. In addition, in the curing process after mixing the concrete composition, a dry environment is formed due to a decrease in moisture as a result of a hydration reaction, and the nutrients and growth sites of bacteria are reduced due to volume expansion. Moreover, the size of the internal pores of the cured concrete composition is 1 µm which is smaller than the general size of bacteria, making it difficult for bacteria to survive in the pores of the concrete. Due to this influence, the growth activity of bacteria inside the hardened concrete composition is inhibited, and most of the bacteria die after about 30 days.

Therefore, the concrete composition according to the disclosure includes a porous material impregnated with bacteria, so that an environment in which bacteria can grow can be formed even inside the cured concrete composition.

The porous material may preferably have an effective moisture content of 40 vol% or more and a porosity of 50 vol% or more, thereby forming an environment in which bacteria can grow. In particular, the porous material has a property of adsorbing organic substances by exchangeable cations (Mg²⁺, Ca²⁺) present on the surface, and thus may absorb bacteria and a culture medium necessary for the growth of bacteria.

In general, in the concrete composition, calcium hydroxide (Ca(OH)₂), which is strongly alkaline, is generated during the hydration process, thus forming a strongly alkaline environment with a pH of 11 to 12. Also, it is difficult for sufficient light and air to reach the inside of the hardened concrete composition. Therefore, in the disclosure, it is important to select alkalophilic bacteria that are not sensitive to anaerobic, aerobic, and light/dark conditions and have a carbon dioxide adsorption mechanism.

In addition, the bacteria according to the disclosure may be alkalophilic bacteria that not only has a carbon dioxide adsorption mechanism but also forms a glycocalyx. The glycocalyx is a membrane formed around bacteria through metabolic activity of bacteria, which makes the internal structure of the concrete structure dense and lowers the permeability of the concrete structure. Therefore, the glycocalyx can prevent carbonation and freezing and thawing of concrete structures, and inhibit the intrusion of harmful substances such as sulfate to prevent deterioration of concrete structures and improve resistance to salt damage.

The bacteria according to the disclosure can be classified into bacteria having a Calvin cycle, a reverse tricarboxylic acid (TCA) cycle, and a hydroxypropionate cycle as carbon dioxide adsorption mechanisms.

First, the bacteria having the Calvin cycle as a carbon dioxide adsorption mechanism may include one or more species selected from the group consisting of Rhodobacter capsulatus, Rhodopseudomonas palustris, Rhodobacter blasticus, and Rhodobacter sphaeroides, which are found in the photosynthetic bacterium Rhodobacter.

Second, the bacteria having the reverse TCA cycle as a carbon dioxide adsorption mechanism may include one or more species selected from the group consisting of Thermoproteus and Sulfolobus.

Third, the bacteria having a hydroxypropionate cycle as a carbon dioxide adsorption mechanism may be a green non-sulfur bacterium, and preferably may contain one or more species selected from the group consisting of Planctomyces and Anammox.

Hereinafter, the carbon dioxide adsorption mechanism of bacteria according to the disclosure will be described in more detail.

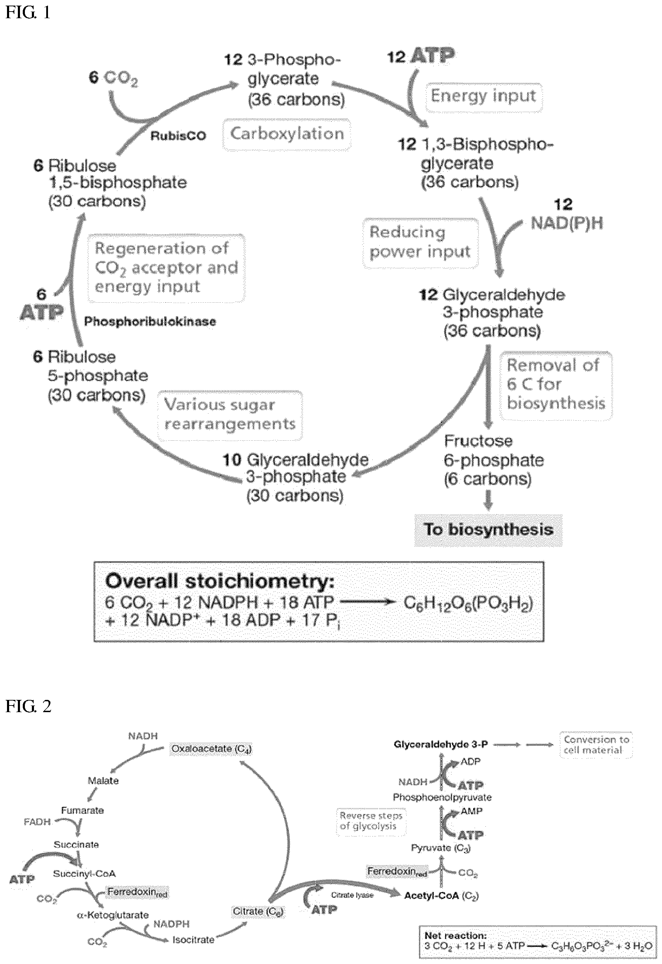

FIG. 1 is a diagram showing a mechanism in which bacteria adsorb carbon dioxide through the Calvin cycle, according to the disclosure.

Referring to FIG. 1, the Calvin cycle adsorbs 6 molecules of carbon dioxide in the process of synthesizing glucose from ATP and NADPH. The Calvin cycle can be roughly divided into three steps. The first step is the fixation of carbon dioxide, catalyzed by an enzyme called rubisco. The rubisco combines ribulose 1,5 diphosphate (RuBP), which consists of 5 carbons with carbon dioxide to form glyceryl triphosphate (3PG) of two molecules. The second step is a process in which glyceryl triphosphate (3PG) is converted to glyceraldehyde triphosphate (G3P) through a reduction process. The glyceraldehyde triphosphate (G3P) thus produced is used to synthesize glucose. Finally, the third step is a reaction in which regeneration of ribulose 1,5 diphosphate (RuBP) occurs. The glyceraldehyde triphosphate (G3P) produced in the second step is converted to ribulose 1,5 diphosphate (RuBP) through ribulose monophosphate (RuMP). The ribulose 1,5 diphosphate (RuBP) thus regenerated may adsorb carbon dioxide while repeating the process of combining with carbon dioxide.

FIG. 2 is a diagram showing a mechanism in which bacteria adsorb carbon dioxide through the reverse TCA cycle, according to the disclosure.

Referring to FIG. 2, the reverse TCA cycle corresponds to turning the TCA cycle in the reverse direction and adsorbs three molecules of carbon dioxide in the process of converting carbon dioxide to acetyl CoA. The reverse TCA cycle uses enzymes such as fumarate reductase, which reduces fumarate to succinate, α-ketoglutarate: ferredoxin oxidoreductase, which transfers electrons received from ferrodoxin to carbon dioxide and succinyl CoA to reduce them to alpha-ketoglutaric acid, and ATP citrate lyase, which breaks down citrate to produce oxaloacetate and acetyl CoA.

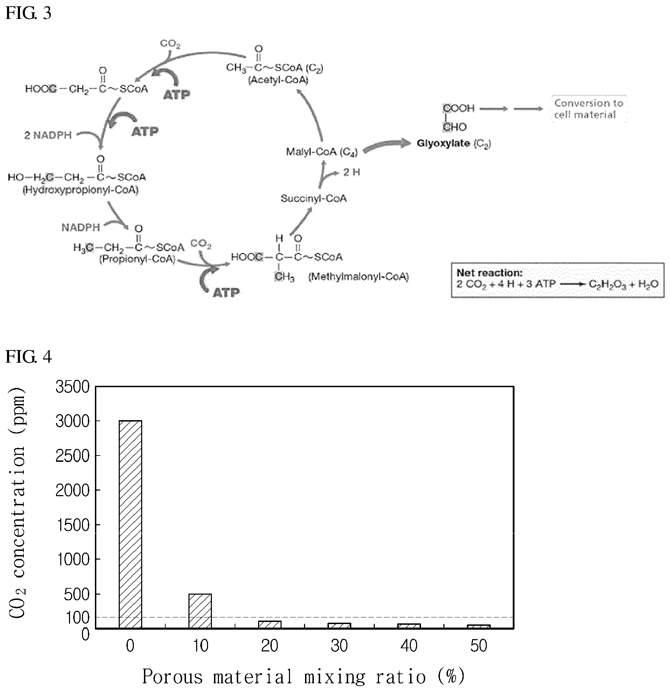

FIG. 3 is a diagram showing a mechanism in which bacteria adsorb carbon dioxide through the hydroxypropionate cycle according to the disclosure.

Referring to FIG. 3, the hydroxypropionate cycle adsorbs two molecules of carbon dioxide in the process of converting acetyl CoA to malyl CoA. Referring at the steps of the hydroxypropionate cycle adsorbing carbon dioxide in detail, first, acetyl CoA adsorbs carbon dioxide to form malonyl CoA, and malonyl CoA is converted to propionyl CoA through a hydroxypropionate, which is an intermediate. Then, in the process of carboxylation of propionyl CoA to methylmalonyl CoA, carbon dioxide is adsorbed, and methylmalonyl CoA is isomerized to succinyl CoA. Then, the succinyl CoA forms malyl CoA, and the malyl CoA is decomposed into acetyl CoA and glyoxylate.

A 3-hydroxypropionate/4-hydroxybutyrate cycle and a dicarboxylate/4-hydroxybutyrate cycle are known as a carbon dioxide adsorption mechanism in which the hydroxypropionate cycle is modified.

The concrete composition according to the disclosure contain alkalophilic bacteria having a carbon dioxide adsorption mechanism and forming a glycocalyx, thereby improving durability of concrete structures and adsorbing carbon dioxide in the air regardless of light and shade conditions.

In addition, the concrete composition according to the disclosure contains alkalophilic bacteria having a carbon dioxide adsorption mechanism and forming a glycocalyx, so that even when the surface of the concrete structure is damaged, the ability to adsorb carbon dioxide can be maintained by the bacteria present inside, and it may show the carbon dioxide adsorption rate 3 to 4 times higher than the carbon dioxide adsorption rate by the carbonation of general carbonation of concrete.

The porous material is sterilized using nanobubble water, then completely immersed in a culture medium in which bacteria are cultured at a weight ratio of 1:3 to 1:4, and applied with negative pressure to impregnate the bacteria. Here, the process of applying negative pressure may be performed at 15 to 25°C and 1 to 30 torr in a negative pressure container for 20 to 80 minutes, but embodiments are not limited thereto.

Nanobubble water, which sterilizes porous materials, is an ultra-fine water droplet bubble containing oxygen, and contains a large amount of oxygen in the bubble. For this reason, when the porous material is washed with nanobubble water, the amount of dissolved oxygen inside the porous material may be increased to increase the activity of photosynthetic bacteria. In addition, nanobubble water can remove foreign substances attached to the surface of porous materials, and since hydroxyl radicals generated in water have (-) properties, they can be adsorbed to (+) ions, which are contaminants, thereby remove contaminants. In nanobubble water, oxygen is activated in the air while nanobubbles are generated to form molecules such as ozone (O₃) and hydroxyl group (-OH), which can act as a disinfectant that destroys organisms and volatile organic compounds. In this case, the porous material may be washed with nanobubble water and then dried at 100°C for 6 to 10 hours, but embodiments are not limited thereto.

Bacteria may be cultured in a culture medium at a concentration of 1×10⁹ cell/mL or more in an incubator at 5 to 50°C in order for the concrete composition according to the disclosure to have a desirable carbon dioxide adsorption rate. Here, the culture medium may contain, but is not limited to, yeast extract, disodium succinate hexahydrate, and potassium dihydrogen phosphate (KH₂PO₄). For example, the culture medium may contain, per 1 L of purified water, yeast extract 1.0 g/L, disodium succinate hexahydrate 1.0 g/L, ethanol 0.5 mL/L, ferric citrate solution (0.5%) 1 mL/L, potassium dihydrogen phosphate (KH₂PO₄) 0.5 g/L, magnesium sulfate (MgSO₄ 7H₂O) 0.4 g/L, sodium chloride (NaCl) 0.4 g/L, ammonium chloride (NH₄Cl) 0.4 g/L, calcium chloride (CaCl₂ 2H₂O) 0.05 g/L, and trace element solution (Trace element solution SL-6) 1 mL/L.

The concrete composition according to the disclosure may contain 20 to 25 wt% of the cement-based inorganic binder and 75 to 80 wt% of the aggregate mixture, preferably 23 wt% of the cement-based inorganic binder and 77 wt% of the aggregate mixture. In this case, water-binder ratio may be 30 to 50%. Since the manufacturing method of the concrete composition follows a generally known manufacturing method, the description thereof will be omitted.

Meanwhile, a concrete coating material according to the disclosure contains a cement-based inorganic binder, an aggregate mixture, and a fiber material.

The cement-based inorganic binder may include type 1 ordinary Portland cement, fly ash, blast furnace slag, and polymer powder. The aggregate mixture may include a fine aggregate and a porous material impregnated with alkalophilic bacteria having a carbon dioxide adsorption mechanism and forming a glycocalyx. The fiber material may include at least one of polyethylene and nylon.

Hereinafter, the concrete coating material according to the disclosure will be described in more detail.

The cement-based inorganic binder may be composed of only type 1 ordinary Portland cement, but part of the type 1 ordinary Portland cement may be replaced with blast furnace slag and fly ash in order to reduce carbon dioxide emitted during the production process of the type 1 ordinary Portland cement. For example, the cement-based inorganic binder may contain 30 to 40 wt% of type 1 ordinary Portland cement, 15 to 25 wt% of fly ash, 40 to 50 wt% of blast furnace slag, and 1 to 10 wt% of polymer powder.

Here, the polymer powder may improve adhesion with the concrete structure, and an ethylene-vinyl acetate-based (EVA) resin may be used.

The aggregate mixture may contain 30 to 80 vol% of fine aggregate and 20 to 70 vol% of porous material. Here, the fine aggregate is an aggregate having a diameter of 5 mm or less, and may contain sand, bottom ash, and crushed stone.

The porous material contained in the concrete coating material according to the disclosure is the same as the porous material contained in the concrete composition according to the disclosure, so description thereof will be omitted.

The fiber material may prevent deformation such as expansion and contraction of the concrete coating material, and may contain at least one of polyethylene and nylon fibers. In this case, the fiber material may have a diameter of 100 to 140 µm, preferably 120 µm.

The concrete coating material according to the disclosure may contain 20 to 50 wt% of the cement-based inorganic binder and 50 to 80 wt% of the aggregate mixture, and may contain 0.1 to 1 part by volume of the fiber material based on 100 parts by volume of the cement-based inorganic binder and the aggregate mixture. In this case, water-binder ratio may be 20 to 50%.

The concrete coating material according to the disclosure may be used in a shotcrete construction method for spraying it through a hose by using compressed air to be placed on the surface of a concrete structure. The shotcrete construction allows the coating material to enter into very small gaps on the surface of the concrete structure and firmly adhere to it, thereby increasing the density and strength of the concrete structure. For example, the concrete coating material according to the disclosure may be compressively sprayed using a mobile mixer with a capacity of 10 to 60 L, a mono-pump having a pumping force of 40 to 100 bar at 300 to 1000 rpm, and an air compressor of 100 to 1000 kPa, and may be placed once or twice.

The concrete coating material according to the disclosure can be easily applied to not only newly constructed concrete structures, but also already constructed concrete structures, and can increase the efficiency of carbon dioxide adsorption by being cast on the surface of concrete structures in contact with the atmosphere.

### [Comparative Example and Experimental Example]

Hereinafter, concrete blocks according to comparative examples and experimental examples were prepared in order to confirm the adsorption performance of carbon dioxide of the concrete composition according to the disclosure.

In Comparative Example 1, a concrete block having a water-cement ratio of 40%, cement of 23 wt%, and fine aggregate of 77 wt%, with a unit cement weight of 450 kg/m³ was used. Here, the aggregate used crushed fine aggregate.

In Experimental Example 1, a concrete block having a water-cement ratio of 40%, containing 23 wt% of cement, and 77 wt% of an aggregate mixture, with a unit cement weight of 450 kg/m³ was used. The aggregate mixture contains 90 vol% of fine aggregate and 10 vol% of porous material. As the porous material used, expanded vermiculite was immersed in a culture medium in which Rhodobacter capsulatus was cultured in a negative pressure container, and then impregnated with bacteria by applying a pressure of 10 to 30 torr for 30 minutes.

Experimental Example 2 is the same as Experimental Example 1, except that the aggregate mixture of the concrete block contains 80 vol% of fine aggregate and 20 vol% of porous material.

Experimental Example 3 is the same as Experimental Example 1, except that the aggregate mixture of the concrete block contains 70 vol% of fine aggregate and 30 vol% of porous material.

Experimental Example 4 is the same as Experimental Example 1, except that the aggregate mixture of the concrete block contains 60 vol% of fine aggregate and 40 vol% of porous material.

Experimental Example 5 is the same as Experimental Example 1, except that the aggregate mixture of the concrete block contains 50 vol% of fine aggregate and 50 vol% of porous material.

The mixing ratio of the porous material impregnated with bacteria in the aggregate mixtures of Comparative Example 1 and Experimental Examples 1 to 5 is shown in [Table 1] below.

**[Table 1]**

| | Mixing ratio (vol%) of porous material impregnated with bacteria in the aggregate mixture |
|---|---|
| Comparative Example 1 | 0 |
| Experimental Example 1 | 10 |
| Experimental Example 2 | 20 |
| Experimental Example 3 | 30 |
| Experimental Example 4 | 40 |
| Experimental Example 5 | 50 |

The materials according to Comparative Example 1 and Experimental Examples 1 to 5 were placed in an airtight container saturated with 3000 ppm carbon dioxide, and the carbon dioxide concentration inside the airtight container was checked at 14 days.

FIG. 4 is a graph showing the adsorption performance of carbon dioxide at 14 days of age of concrete blocks according to a comparative example and experimental examples.

Referring to FIG. 4, at 14 days, carbon dioxide of 100 ppm or less was detected in the airtight containers in which the concrete blocks of the Experimental Examples 2 to 5 were inserted, in which the mixing ratio of the porous material impregnated with bacteria was 20 vol% or more. That is, it was confirmed that the concrete blocks of the Experimental Examples 2 to 5 in which the mixing ratio of the porous material impregnated with bacteria was 20 vol% or more showed a carbon dioxide adsorption rate of about 96.7% or more.

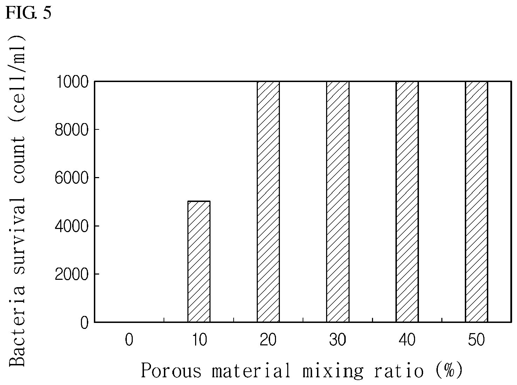

FIG. 5 is a graph showing the survival number of bacteria at 14 days of age of concrete blocks according to a comparative example and experimental examples.

Referring to FIG. 5, at 14 days, it was confirmed that bacteria of 1.0 × 10⁴ cell/mL or more survived in the concrete blocks of Experimental Examples 2 to 5 in which the mixing ratio of the porous material impregnated with bacteria was 20 vol% or more.

In addition, in order to confirm the durability according to the mixing ratio of the porous material impregnated with bacteria in the concrete composition according to the disclosure, the compressive strength and flexural strength in Comparative Example 1 and Experimental Examples 1 to 5 were measured at 28 days and are shown in [Table 2] below.

**[Table 2]**

| | Compressive strength (MPa) at 28 days | Flexural strength (MPa) at 28 days |
|---|---|---|
| Comparative Example 1 | 30 | 6.6 |
| Experimental Example 1 | 31 | 6.6 |
| Experimental Example 2 | 30 | 6.3 |
| Experimental Example 3 | 27 | 5.8 |
| Experimental Example 4 | 25 | 5.0 |
| Experimental Example 5 | 20 | 3.6 |

Referring to [Table 2], it was confirmed that the concrete blocks of Comparative Example 1 and Experimental Examples 1 to 5, in which the mixing ratio of the porous material impregnated with bacteria is 50 vol% or less, have a compressive strength of 20 MPa or more at 28 days. Also, it was confirmed that the concrete blocks of Comparative Example 1 and Experimental Examples 1 to 4, in which the mixing ratio of the porous material impregnated with bacteria was 40 vol% or less, have a flexural strength of 5 MPa or more at 28 days.

While the present invention has been particularly shown and described with reference to exemplary embodiments thereof, it will be understood by those skilled in the art that various changes in form and details may be made therein without departing from the scope of the present invention as defined by the appended claims.

## Claims

1. A concrete composition comprising:
a cement-based inorganic binder including at least one of type 1 ordinary Portland cement, blast furnace slag, and fly ash; and
an aggregate mixture including a normal aggregate and a porous material impregnated with alkalophilic bacteria having a carbon dioxide adsorption mechanism and forming a glycocalyx.

2. The concrete composition of claim 1, comprising:
20 to 25 wt% of the cement-based inorganic binder, and 75 to 80 wt% of the aggregate mixture.

3. The concrete composition of claim 2, wherein the aggregate mixture contains 70 to 95 vol% of the normal aggregate, and 5 to 30 vol% of the porous material.

4. The concrete composition of claim 1, wherein the bacteria is one or more species selected from the group consisting of Rhodobacter capsulatus, Rhodopseudomonas palustris, Rhodobacter blasticus, and Rhodobacter sphaeroides.

5. The concrete composition of claim 1, wherein the bacteria is one or more species selected from the group consisting of Thermoproteus, Sulfolobus, Planctomyces, and Anammox.

6. The concrete composition of claim 1, wherein the porous material contains at least one of expanded vermiculite, perlite, diatomaceous earth, and superabsorbent polymer.

7. The concrete composition of claim 1, wherein the porous material is impregnated with the bacteria under a negative pressure condition.

8. A concrete coating material comprising:
a cement-based inorganic binder including type 1 ordinary Portland cement, fly ash, blast furnace slag, and polymer powder;
an aggregate mixture including fine aggregate and a porous material impregnated with alkalophilic bacteria having a carbon dioxide adsorption mechanism and forming a glycocalyx; and
a fiber material including at least one of polyethylene and nylon.

9. The concrete coating material of claim 8, comprising:
20 to 50 wt% of the cement-based inorganic binder;
50 to 80 wt% of the aggregate mixture; and
0.1 to 1 part by volume of the fiber material based on 100 parts by volume of the cement-based inorganic binder and the aggregate mixture.

10. The concrete coating material of claim 9, wherein the cement-based inorganic binder contains 30 to 40 wt% of the type 1 ordinary Portland cement, 15 to 25 wt% of the fly ash, 40 to 50 wt% of the blast furnace slag, and 1 to 10 wt% of the polymer powder.

11. The concrete coating material of claim 8, wherein the polymer powder is an ethylene vinyl acetate (EVA) resin.

12. The concrete coating material of claim 9, wherein the aggregate mixture contains 30 to 80 vol% of the fine aggregate and 20 to 70 vol% of the porous material.

13. The concrete coating material of claim 8, wherein the fiber material has a diameter of 100 to 140 µm.

14. A shotcrete construction method using the concrete coating material of any one of claims 8 to 13.
